(19) Europäisches Patentamt

European Patent Office

Office européen des brevets

(11) **EP 0 681 269 B1**

(12) **EUROPÄISCHE PATENTSCHRIFT**

(45) Veröffentlichungstag und Bekanntmachung des Hinweises auf die Patenterteilung:
**16.05.2001   Patentblatt 2001/20**

(51) Int Cl.⁷: **G06T 5/00**

(21) Anmeldenummer: **95201145.0**

(22) Anmeldetag: **03.05.1995**

(54) **Verfahren zur Wiedergabe insbesondere einer digitalen Röntgenaufnahme als sichtbares Bild sowie Anordnung zur Durchführung des Verfahrens**

Method and apparatus for reproducing a radiograph as a visible image

Appareil et procédé de réproduction d'une radiographie comme image visible

(84) Benannte Vertragsstaaten:
**DE FR GB**

(30) Priorität: **06.05.1994   DE 4415990**

(43) Veröffentlichungstag der Anmeldung:
**08.11.1995   Patentblatt 1995/45**

(73) Patentinhaber:
• **Philips Corporate Intellectual Property GmbH
52064 Aachen (DE)**
Benannte Vertragsstaaten:
**DE**
• **Koninklijke Philips Electronics N.V.
5621 BA Eindhoven (NL)**
Benannte Vertragsstaaten:
**FR GB**

(72) Erfinder:
• **Neitzel, Ulrich, Dr.
D-22335 Hamburg (DE)**
• **Maack, Hanns-Ingo
D-22335 Hamburg (DE)**
• **Pralow, Thomas
D-22335 Hamburg (DE)**

(74) Vertreter: **Hartmann, Heinrich, Dipl.-Ing. et al
Philips Corporate Intellectual Property GmbH,
Habsburgerallee 11
52064 Aachen (DE)**

(56) Entgegenhaltungen:
**DE-A- 3 629 409            US-A- 4 446 484**

**Beschreibung**

In der konventionellen Radiographie werden sichtbare Bilder einer Röntgenaufnahme mittels eines Filmes hergestellt, der während der Röntgenaufnahme belichtet wird. Die Erkennbarkeit von Details auf einem solchen Röntgenfilm hängt einerseits von dem Detailkontrast und andererseits von der Dichte ab.

Unter "Dichte" wird hierbei der dekadische Logarithmus des Quotienten aus der auf den Röntgenfilm auffallenden Lichtmenge und der vom Röntgenfilm durchgelassenen Lichtmenge bezeichnet. Dieser Begriff ist gleichbedeutend mit den in der Literatur als "Schwärzung" oder als "optische Dichte" bezeichneten Begriffen. Die Dichte eines Films nimmt mit dem dekadischen Logarithmus seiner Belichtung zu - wenn man von Solarisationseffekten absieht. Diese Abhängigkeit der Dichte vom Logarithmus der Belichtung wird im folgenden auch als "Dichtefunktion" bezeichnet.

Als Kontrast C wird hierbei der Differentialquotient der Dichtefunktion bezeichnet, d.h. C = dD/d(log B), wobei D die Dichte und B die Belichtung darstellt. Die Abhängigkeit dieses (Detail-) Kontrastes vom Logarithmus der Belichtung wird im folgenden als "Kontrastfunktion" bezeichnet. Bei einem Film hängen also Dichtefunktion und Kontrastfunktion untrennbar miteinander zusammen, d.h. sie sind korreliert.

Bei digitalen Röntgenaufnahmesystemen ergibt sich aus der Röntgenaufnahme noch kein sichtbares Bild, sondern ein aus digitalen, von der Belichtung abhängigen Eingangs-Bildwerten bestehendes Datenfeld. Dieses Datenfeld kann mittels einer geeigneten Ausgabeeinheit. z.B. eines Laser-Imagers, oder mittels eines Monitors in "Introduction to the Physics of Diagnostic Radiology", 3rd Edition, Lea & Febiger, Philadelphia, 1984, bekannt, kann der Benutzer nachträglich mittels einer sogenannten Fensterverarbeitung (windowing) die Steigung der Dichtefunktion und deren Lage vorgeben. Allerdings hängen auch hierbei Dichtefunktion und Kontrastfunktion voneinander ab (der Kontrast entspricht der Steigung der Dichtefunktion).

Aus der EP-A-482 712 ist ein Verfahren zur Umsetzung digitaler Eingangs-Bildwerte in ein sichtbares Bild bekannt, bei dem die Dynamik in den großflächigen Bildbereichen komprimiert wird, während die Detailkontraste erhalten bleiben. Zu diesem Zweck werden die Eingangs-Bildwerte einer Tiefpaßfilterung unterzogen. Die so gebildeten Tiefpaß-Bildwerte werden gemäß einer Ausgleichsfunktion transformiert, die für kleine Tiefpaß-Bildwerte positive Bildwerte und große Tiefpaß-Bildwerte negative Bildwerte erzeugt. Diese Bildwerte werden bildpunktweise den Eingangs-Bildwerten überlagert.

Nachteilig ist dabei, daß die vom Benutzer vorgebbare Ausgleichsfunktion einerseits die Helligkeit bzw. die Dichte des Ausgangs-Bildes verändert, im übrigen aber einen Einfluß auf das Bild hat, den der Benutzer nicht unmittelbar vorhersehen kann.

Weiterhin ist aus der DE-PS 29 52 422 ein sogenanntes "Unsharp Masking"-Verfahren bekannt, bei dem aus den digitalen Eingangs-Bildwerten einer Röntgenaufnahme HochpaßBildwerte abgeleitet werden, die mit einem Gewichtungsfaktor gewichtet und danach den Eingangs-Bildwerten überlagert werden. Der Gewichtungsfaktor kann dabei eine Konstante sein, er kann aber auch in Abhängigkeit von den Eingangs-Bildwerten oder in Abhängigkeit von daraus abgeleiteten Tiefpaß-Bildwerten geändert werden.

Bei beiden Verfahren wird das Verhältnis der kleinen Strukturen im Bild (bzw. der hohen Ortsfrequenz-Anteile) zu den großen Strukturen im Bild (bzw. den niedrigen Ortsfrequenz-Komponenten) im Vergleich zu dem unverarbeiteten Eingangsbild verändert, und zwar so, daß die kleinen Strukturen stärker hervortreten. Das bedeutet, daß die Kontrastfunktion und die Dichtefunktion nicht mehr miteinander korreliert sind - falls man die Kontrastfunktion auf die Bildbereiche mit den höheren Ortsfrequenzen bezieht und die Dichtefunktion auf die Bildbereiche mit den niedrigen Ortsfrequenzen. Allerdings kann der Benutzer dabei nicht übersehen, ob und wie die von ihm vorgegebenen Parameter - die Ausgleichsfunktion bzw der Gewichtungsfaktor - den Kontrast und die Dichte des sichtbaren Bildes beeinflussen.

Aufgabe der vorliegenden Erfindung ist es, ein Verfahren zur Wiedergabe einer räumlichen Verteilung, insbesondere einer Röntgenaufnahme, deren Bildpunkten digitale Eingangsbildwerte zugeordnet sind, zu schaffen, bei dem der Benutzer auf einfache Weise den Bildcharakter seinen Bedürfnissen anpassen kann.

Diese Aufgabe wird durch folgende Maßnahmen gelöst.

- Eingeben der für die Wiedergabe gewünschten Kontrastfunktion und Dichtefunktion,
- Verarbeiten der Eingangs-Bildwerte in zwei Signalpfaden, Summieren der in den Signalpfaden gebildeten Bildwerte und Zuführen der so entstehenden Summen-Bildwerte zu einer Ausgabeeinheit zur Erzeugung eines sichtbaren Bildes,
- Filterung der Eingangs-Bildwerte in dem einen Signalpfad zur Erzeugung von Tiefpaß- oder Hochpaß-Bildwerten und dazu komplementäre oder keine Filterung in dem anderen Signalpfad,
- Transformation der in dem anderen Signalpfad entstehenden Bildwerte oder der Summen-Bildwerte mit einer ersten Transformationsfunktion und Transformation der in dem einen Signalpfad gebildeten Bildwerte mit einer zweiten Transformationsfunktion, wobei die beiden Transformationsfunktionen so aus der eingegebenen Dichte- und Kontrastfunktion abgeleitet werden, daß in dem wiedergegebenen Bild der Detailkontrast entsprechend der Kontrastfunktion und die Helligkeit bzw Dichte der gößeren Bildstrukturen entsprechend der Dichtefunktion verlaufen.

Unter "komplementärer Filterung" wird dabei eine Filterung verstanden, die zusammen mit der Filterung in dem anderen Signalpfad das aus den Eingangs-Bildwerten zusammengesetzte Eingangsbild ergibt. Wird beispielsweise in dem einen Signalpfad eine Tiefpaßfilterung vorgenommen, dann muß in dem anderen Signalpfad eine Hochpaßfilterung vorgenommen werden, und zwar mit dem gleichen Filterkernel. Die bildpunktweise Summierung des durch diese beiden Filterprozesse erzeugten Tiefpaß- und Hochpaßbildes würde das aus den Eingangs-Bildwerten zusammengesetzte Eingangsbild ergeben.

Die Erfindung beruht auf folgenden Überlegungen. Da in mindestens einem der beiden Signalpfade eine Filterung durchgeführt wird, ist es möglich, die Hochpaß- und die Tiefpaßanteile in dem wiederzugebenden Bild unterschiedlich zu beeinflussen, und zwar durch geeignete Wahl der Transformationsfunktionen so, daß sich in den Hochpaßanteilen des Bildes, d.h. in seinen feinen bzw. räumlich kleinen Details die vom Benutzer vorgegebene Kontrastfunktion ergibt, und daß sich in den Tiefpaßanteilen des Bildes, d.h. in seinen groben bzw. räumlich großen Strukturen die gewünschte Dichtefunktion ergibt. Die dafür erforderlichen Transformationsfunktionen lassen sich stets aus den vorgegebenen Kontrast- und Dichtefunktionen ableiten. Somit kann der Benutzer Kontrast und Dichte (bzw. Helligkeit) des Bildes unmittelbar vorgeben, d.h. Bildparameter, die für ihn unmittelbar evident sind - im Gegensatz zu Parametern wie der Kompressionskurve oder dem Anhebungsfaktor bei dem bekannten Verfahren, deren Einfluß auf den Bildcharakter nicht ohne weiteres vorhersehbar sind.

Eine bevorzugte Ausführungsform der Erfindung besteht darin,

- daß die erste Transformationsfunktion der eingegebenen Dichtefunktion entspricht,
- daß die zweite Transformationsfunktion der eingegebenen Kontrastfunktion entspricht,
- daß aus den Eingangs-Bildwerten Hochpaß-Bildwerte abgeleitet werden
- daß die Hochpaß-Bildwerte mit einem Gewichtungsfaktor multipliziert werden, dessen Abhängigkeit von den Tiefpaß-Bildwerten der zweiten Transformationsfunktion entspricht
- daß aus den Eingangs-Bildwerten Tiefpaß-Bildwerte abgeleitet werden
- daß die Tiefpaß-Bildwerte einer Transformation entsprechend der ersten Transformationsfunktion unterzogen werden
- daß die transformierten Tiefpaß-Bildwerte und die mit dem Gewichtungsfaktor multiplizierten Hochpaß-Bildwerte bildpunktweise überlagert werden.

Der besondere Vorteil dieser Ausführungsform, bei der in dem einen Signalpfad eine Hochpaßfilterung und im anderen Signalpfad eine Tiefpaßfilterung besteht darin, daß die beiden Transformationsfunktionen aus der vorgegebenen Kontrast- und Dichtefunktion nicht durch eine aufwendige Ableitung errechnet werden müssen, sondern daß sie mit diesen identisch sind. Die Tiefpaßanteile werden in dem einen Signalpfad durch eine Transformationsfunktion transformiert, die der vom Benutzer eingegebenen Dichtefunktion entspricht, und die Hochpaßbildwerte werden in dem anderen Signalpfad mit einem Gewichtungsfaktor multipliziert, dessen Abhängigkeit von den Eingangs-Bildwerten oder den Tiefpaß-Bildwerten der vom Benutzer vorgegebenen Kontrastfunktion entspricht (diese Multiplikation mit dem Gewichtungsfaktor stellt die zweite Transformation dar, die allerdings von zwei Parametern, nämlich den Hochpaß-Bildwerten auf der einen Seite und den Eingangs- oder den Tiefpaß-Bildwerten auf der anderen Seite abhängt).

Es ist nicht erforderlich, daß in beiden Signalen die Eingangsbildwerte einem Filterprozeß unterworfen werden; es genügt, wenn nur in einem der beiden Signalpfade eine (Tiefpaß- oder Hochpaß-) Filterung durchgeführt wird.

Eine darauf basierende Ausführungsform des erfindungsgemäßen Verfahrens sieht vor,

- daß die erste Transformationsfunktion durch Berechnung des Integrals über die eingegebene Kontrastfunktion und durch Anpassung des Integrals an die maximale Dichte bzw. Helligkeit eines sichtbaren Bildes gebildet wird,
- daß die zweite Transformationsfunktion aus der Differenz der ersten Transformationsfunktion und der eingegebenen Dichtefunktion für jeweils die gleiche Dichte bzw. Helligkeit ermittelt wird,
- daß aus den Eingangs-Bildwerten Tiefpaß-Bildwerte gebildet werden, die entsprechend der zweiten Transformationsfunktion transformiert werden,
- daß die transformierten Tiefpaß-Bildwerte den Eingangs-Bildwerten überlagert werden und
- daß die dadurch entstehenden Summen-Bildwerte einer Transformation entsprechend der ersten Transformationsfunktion unterzogen werden.

Bei dieser Ausführungsform wird die Dynamik der großflächigen Strukturen (niedrige Ortsfrequenzen) komprimiert. Wenn - zufälligerweise - die eingegebene Dichtefunktion der korrelierten Dichtefunktion entspricht, erfolgt keinerlei Transformation der Tiefpaß-Bildwerte, d.h. die transformierten Tiefpaß-Bildwerte haben den Wert Null. In diesem Fall werden lediglich die Eingangs-Bildwerte entsprechend der ersten Transformationsfunktion transformiert, die der korrelierten Dichtefunktion entspricht. Wenn die genannte Voraussetzung nicht erfüllt ist, ergeben sich in Abhängigkeit von der Abweichung zwischen der eingegebenen und der korrelierten Dichtefunktion durch die Transformation von Null verschiedene Tiefpaß-Bildwerte, wodurch der Dynamik-Umfang für die großflächigen Bildbereiche (niedrige Ortsfrequenzen) verändert - in der Regel komprimiert - wird.

Bei einer anderen Ausführungsform der Erfindung ist vorgesehen,

- daß die erste Transformationsfunktion der eingegebenen Dichtefunktion entspricht,
- daß die zweite Transformationsfunktion aus der Differenz der eingegebenen Kontrastfunktion und der korrelierten Kontrastfunktion bestimmt wird,
- daß aus den Eingangs-Bildwerten Hochpaß-Bildwerte abgeleitet werden,
- daß die Hochpaß-Bildwerte mit einem Gewichtungsfaktor multipliziert werden, dessen Abhängigkeit von den Tiefpaß-Bildwerten der zweiten transformationsfunktion entspricht
- daß die Eingangs-Bildwerte einer Transformation entsprechend der ersten Transformationsfunktion unterzogen werden und
- daß zur Bildung der Ausgangsbildwerte die transformierten Eingangs-Bildwerte und die mit dem Gewichtungsfaktor multiplizierten Hochpaß-Bildwerte bildpunktweise überlagert werden.

Unter korrelierter Kontrastfunktion wird dabei diejenige Kontrastfunktion verstanden, die mit der vom Benutzer eingegebenen Dichtefunktion korreliert ist, d. h. dem Differentialquotienten dieser Dichtefunktion entspricht. Entsprechend wird unter korrelierter Dichtefunktion die Dichtefunktion verstanden, die mit der vom Benutzer eingegebenen Kontrastfunktion korreliert ist, d.h. dem Integral über die Kontrastfunktion entspricht.

Bei dieser letzten Ausführungsform werden, ähnlich wie bei dem "Unsharp Masking"-Verfahren, die Hochpaß-Bildwerte mit einem - in der Regel nicht konstanten - Gewichtungsfaktor multipliziert. Wenn die korrelierte Dichtefunktion mit der eingegebenen Dichtefunktion zufälligerweise übereinstimmt, ist der Gewichtungsfaktor Null, und die gewünschte Kontrast- und Dichtefunktion wird dabei dadurch erzielt, daß lediglich die Eingangs-Bildwerte entsprechend der eingegebenen Dichtefunktion transformiert werden. Ist diese Voraussetzung nicht erfüllt, dann ergibt sich der Gewichtungsfaktor aus der Differenz zwischen der eingegebenen Kontrastfunktion und der korrelierten Kontrastfunktion.

Eine für Röntgenaufnahmesysteme geeignete Ausbildung der Erfindung, bei der davon ausgegangen wird, daß durch die Röntgenaufnahme digitale Bildwerte gebildet werden, die der Dosis bzw. der Belichtung in den betreffenden Bildpunkten proportional sind, sieht vor, daß die EingangsBildwerte aus diesen Bildwerten durch eine logarithmische Transformation abgeleitet werden.

Eine Anordnung zur Durchführung des Verfahrens ist gekennzeichnet durch

a) eine Detektoranordnung (4,5) zur Umsetzung der ortsabhängigen Strahlungsintensität einer Röntgenaufnahme in ein aus digitalen Eingangs-Bildwerten (E) bestehendes Datenfeld,

b) Mittel (15) zur getrennten Eingabe einer Dichtefunktion ($D_i$) und einer Kontrastfunktion ($C_i$),

c) Mittel (16) zum Ableiten einer ersten Transformationsfunktion ($T_1$) und einer zweiten Transformationsfunktion ($T_2$) aus der Kontrastfunktion und der Dichtefunktion,

d) einen ersten und einen zweiten Signalpfad zur Verarbeitung der Eingangs-Bildwerte

e) ein räumlich wirkendes Filter (11;22,23) in dem einen Signalpfad zur Erzeugung von Tiefpaß-Bildwerten ($L_0$) oder von Hochpaß-Bildwerten (H) aus den Eingangs-Bildwerten (E),

f) eine die gefilterten Bildwerte verarbeitenden Transformationsanordnung (12;24,25) zum Transformieren der Tiefpaß- oder Hochpaß-Bildwerte gemäß der einen Transformationsfunktion ($T_2$;G),

g) eine Überlagerungseinrichtung (14;27) zum Überlagern der Bildwerte aus den beiden Signalpfaden, die jeweils dem gleichen Bildpunkt zugeordnet sind, zur Erzeugung von Summen-Signalen

h) eine zweite Transformationsanordnung (17;21) zum Transformieren der im zweiten Signalpfad oder am Ausgang der Überlagerungseinrichtung anliegenden Bildwerte gemäß der anderen Transformationsfunktion,

i) eine die Summen-Bildwerte als sichtbares Bild ausgebenden Bildausgabe-Einheit (18).

Die Erfindung wird nachstehend anhand der Zeichnungen näher erläutert. Es zeigen:

Fig. 1 ein schematisches Blockschaltbild einer Röntgeneinrichtung, mit der eine erste Ausführungsform des erfindungsgemäßen Verfahrens durchgeführt werden kann,

Fig. 2a bis 2e den Verlauf verschiedener, für die erfindungsgemäßen Verfahren wichtiger Funktionen,

Fig. 3 ein Ablaufdiagramm zur Ableitung der beiden Transformationsfunktionen aus der eingegebenen Kontrast- und Dichtefunktion für die Ausführungsform nach Fig. 1 und

Fig. 4 ein schematisches Blockschaltbild einer zweiten Ausführungsform des erfindungsgemäßen Verfahrens.

Fig. 5 ein schematisches Blockschaltbild einer bevorzugten Ausführungsform des erfindungsgemäßen Verfahrens.

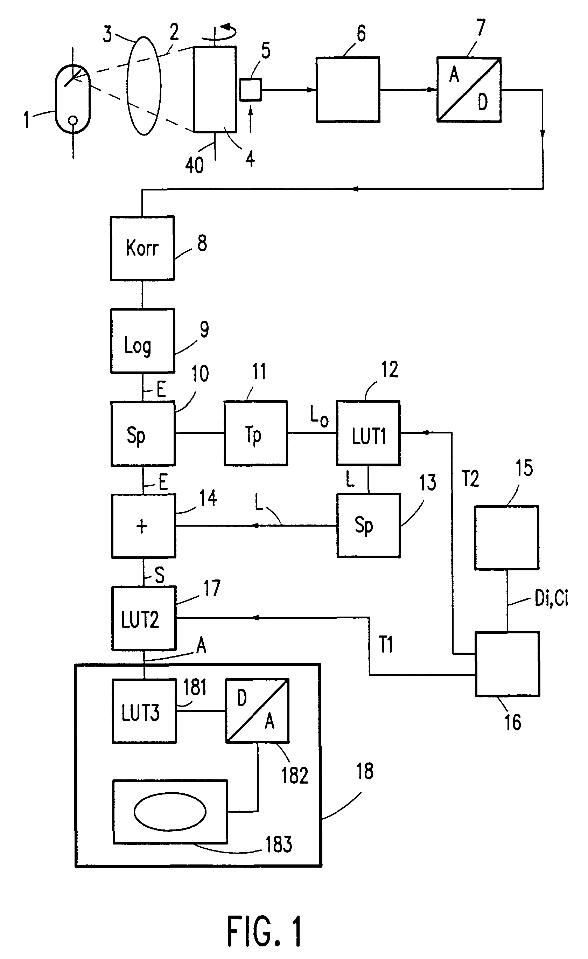

Gemäß Fig. 1 emittiert ein Röntgenstrahler 1 ein Röntgenstrahlenbündel 2, das einen Patienten 3 durchsetzt. Das dadurch erzeugte Röntgenstrahlenrelief wird von einem Bilddetektor 4, 5 in ein elektrisches Signal umgesetzt, dessen zeitlicher Verlauf dem räumlichen Verlauf der Röntgenstrahlung hinter dem Objekt entspricht. Der Bilddetektor umfaßt eine zylinderförmige Trommel 4, die um eine Achse 40 drehbar ist und mit einem Fotoleiter - vorzugsweise Selen - beschichtet ist. Das Röntgenstrahlenrelief wird in ein Ladungsmuster auf dem Fotoleiter umgesetzt, das mit Hilfe eines geeigneten Sensors 5, der parallel zur Drehachse 40 verschiebbar angeordnet ist, bei rotierender Trommel ausgelesen und in ein elektrisches Signal umgesetzt wird.

Das Ausgangssignal des Sensors 5 wird einem Verstärker 6 zugeführt und danach in einem Analog-Digitalwandler 7 in einer Folge von z.B. 16 bit breiten Datenworten umgesetzt. Diese Datenworte sind der Belichtung bzw. der Dosis D proportional, die durch die Röntgenaufnahme in den einzelnen Bildpunkten erzeugt wird. Diese digitalen Datenworte werden in einem Bildprozessor in einer Reihe von Verarbeitungsschritten, die in der Fig. 1 durch einzelne Blöcke symbolisiert sind, einer Bildverarbeitung unterzogen.

In einem ersten Schritt (Block 8) erfolgt eine Korrektur der Datenworte, die sämtliche detektorspezifischen Fehler in den Datenworten beseitigt, so daß anschließend ein von diesen Fehlern befreiter Datensatz zur Verfügung steht. Die einzelnen Datenworte des so korrigierten Datensatzes werden einer logarithmischen Transformation unterzogen (Block 9), vorzugsweise mit Hilfe eines Tabellenspeichers (lookup-table), gemäß der Formel $E = \log D/D_0$, wobei $D_0$ eine Referenzdosis ist, die in an sich bekannter Weise aus dem Inhalt des Bildes z.B. durch eine Histogramm-Analyse abgeleitet wird. Die dabei entstehenden Datenworte E sind dem Logarithmus der in den einzelnen Bildpunkten sich ergebenden Dosis D bzw. Belichtung proportional. Diese Datenworte werden im folgenden als Eingangs-Bildwerte E bezeichnet.

Die Eingangs-Bildwerte E werden in einem Speicher 10 gespeichert und einer Tiefpaßfilterung unterzogen (Block 11). Dabei wird jedem Bildpunkt ein Tiefpaß-Bildwert $L_0$ zugeordnet, der dem arithmetischen Mittelwert der Eingangs-Bildwerte von denjenigen Bildpunkten entspricht die in einem Kernel liegen, einem vorzugsweise quadratischen Teilbereich der Röntgenaufnahme, in dessen Zentrum sich der Bildpunkt befindet, für den der Tiefpaß-Bildwert gebildet werden muß. Der Kernel sollte deutlich größer sein als die für die medizinische Diagnose relevanten feinen Strukturen und z.B. einer Fläche von 3 cm x 3 cm entsprechen. Nacheinander werden für alle Bildpunkte auf diese Weise Tiefpaß-Bildwerte $L_o$ erzeugt.

Die Tiefpaß-Bildwerte $L_o$ werden danach einer Transformation entsprechend einer Transformationsfunktion $T_2$ unterzogen (Block 12). Die Transformationsfunktion hängt auf noch zu erläuternde Weise von der Kontrastfunktion $C_i$ und der Dichtefunktion $D_i$ ab, die der Benutzer - unabhängig voneinander - vorgeben kann, woraus (Block 16) die Transformationsfunktion $T_2$ errechnet wird. Die Transformation erfolgt zweckmäßigerweise mit Hilfe eines Tabellenspeichers (lookup-table), der die Eingangswerte - in diesem Fall die Tiefpaß-Bildwerte $L_o$ als Adressen interpretiert, unter denen die transformierten Bildwerte L gespeichert sind.

Die Vorgabe der Funktionen $C_i$ und $D_i$ durch den Benutzer kann mittels einer geeigneten Eingabeeinheit z.B. einer Tastatur oder einem Graphiktablett erfolgen. Grundsätzlich wäre es aber auch möglich, daß der Benutzer die Dichte- und die Kontrastfunktion dadurch vorgibt, daß er jeweils eine Kontrastfunktion und eine Dichtefunktion aus jeweils einer bereits vorhandenen und in einem Speicher abgelegten Gruppe von Kontrast- bzw. Dichtefunktionen auswählt.

Die Werte L stellen somit die transformierten Tiefpaß-Bildwerte dar. Sie werden nach der Transformation gespeichert (Block 13). Die gespeicherten Eingangs-Bildwerte E und die gespeicherten transformierten Tiefpaß-Bildwerte L werden bildpunktweise summiert, so daß der entstehende Summen-Bildwert S der Summe des Eingangs-Bildwertes E und des transformierten Tiefpaß-Bildwertes L entspricht, die jeweils dem gleichen Bildpunkt zugeordnet sind.

Die so entstandenen Summen-Bildwerte S werden einer Transformation gemäß einer Transformationsfunktion $T_1$ unterzogen. Die Transformationsfunktion $T_1$ wird auf noch zu beschreibende Weise im Block 16 aus der vom Benutzer vorgegebenen Kontrastfunktion $C_i$ abgeleitet. Die durch diese Transformation entstehenden Ausgangs-Bildwerte A werden einer Bildausgabeeinheit 18 zugeleitet, beispielsweise einem Laser-Imager, der daraus ein sichtbares Bild erzeugt, dessen Dichte linear von der Größe der Ausgangs-Bildwerte A abhängt.

Die Wirkung der beschriebenen Verarbeitungsschritte hängt von der Größe der Strukturen im Röntgenbild ab. Kleine Strukturen, die deutlich kleiner sind als der erwähnte Kernel, haben auf die Tiefpaß-Bildwerte $L_o$ bzw. L keinen Einfluß. Sie wirken sich nur auf die Eingangs-Bildwerte E aus und werden nur durch die im Block 17 vorgenommene Transformation gemäß der Transformationsfunktion $T_1$ beeinflußt. Diese Transformationsfunktion entspricht im Prinzip derjenigen Dichtefunktion, die mit der eingegebenen Kontrastfunktion korreliert ist. Deshalb ergibt sich für die feinen Strukturen der mit der vom Benutzer eingegebenen Kontrastkurve $C_i$ verbundene Kontrast.

Die groben Strukturen werden durch die Tiefpaßfilterung nicht unterdrückt. Deshalb werden diese Strukturen sowohl von der Transformationsfunktion $T_1$ als auch von der Transformationsfunktion $T_2$ beeinflußt. Die Transformationsfunktion $T_2$ ist so gewählt, daß sich für die groben Bilddetails nach dieser Transformation und Summierung mit den Eingangs-Bildwerten E (Block 14) und nach der weiteren Transformation (Block 17) für die groben Bildstrukturen der gewünschte bzw. vom Benutzer vorgegebene Dichteverlauf $D_i$ ergibt.

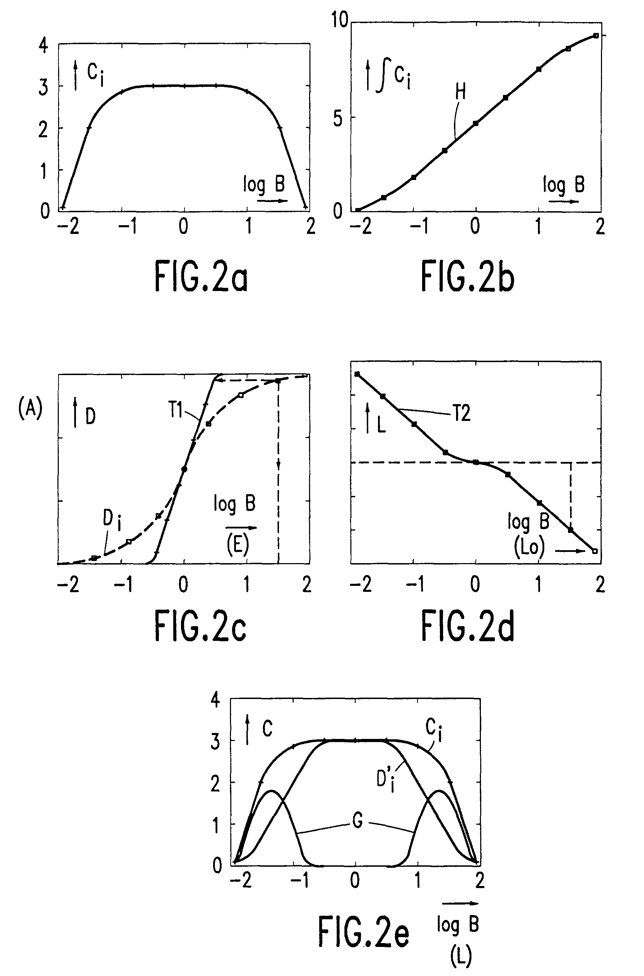

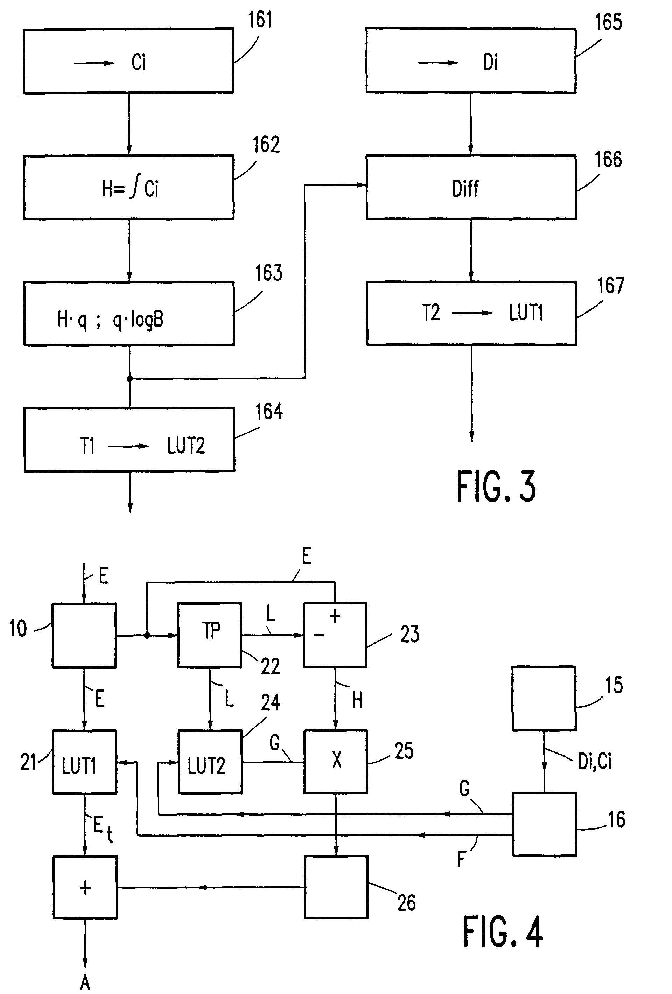

Im folgenden wird anhand der Fig. 2 und 3 näher erläutert, wie die Transformationsfunktionen $T_1$ und $T_2$ aus der Dichtefunktion $D_i$ und der Kontrastfunktion $C_i$ abgeleitet werden, die vom Benutzer vorgegeben werden.

Gemäß dem Diagramm von Fig. 3 gibt der Benutzer zunächst die Kontrastfunktion $C_i$ vor (Block 161). Fig. 2a zeigt eine derartige Kontrastfunktion $C_i$, d.h. den Kontrast als Funktion des Logarithmus der auf einen Referenzwert normierten Belichtung oder Dosis bzw. - da zwischen der Belichtung B und den Bildwerten ein linearer Zusammenhang besteht - als Funktion der Eingangs-Bildwerte E. Der Benutzer muß die Kontrastfunktion lediglich an einigen Stützstellen vorgeben, die in Fig. 2a durch Kreuze markiert sind. Der in ausgezogenen Linien dargestellte Verlauf der Kontrastfunktion ergibt sich daraus durch geeignete Glättungsverfahren, z. B. durch eine kubische SplineInterpolation.

Im zweiten Verarbeitungsschritt (Block 162) wird eine Hilfsfunktion H errechnet, die der korrelierten Dichtefunktion, d.h. dem Integral über die Kontrastfunktion von einem sehr niedrigen Wert von log B (z.B. < -2) bzw. von E bis zu dem jeweiligen Wert von log B (bzw E) entspricht. Diese Hilfsfunktion ist in Fig. 2b dargestellt. Sie stellt den Verlauf der Dichte dar, den ein Film haben würde, wenn sein Kontrast entsprechend der in Fig. 2a dargestellten Kontrastfunktion verlaufen würde. Ein solcher Dichteverlauf ist aber aus zwei Gründen nicht möglich:

a) Im Beispiel ergeben sich Dichtewerte von fast 10. Derart hohe Dichtewerte lassen sich einerseits mit den üblichen Bildausgabe-Einheiten kaum erreichen. Andererseits würde das menschliche Auge in diesen hohen Dichtebereichen keinerlei Bildinformation mehr erkennen können.

b) Die Funktion H repräsentiert nur die dem Kontrast $C_i$ gemäß Fig. 2a zugeordnete Dichtefunktion, in der Regel aber nicht die Dichtefunktion $D_i$, die der Benutzer an der Eingabeeinheit 15 (Fig. 1) vorgegeben hat.

Im nächten Schritt (Block 163) erfolgt eine Reskalierung oder Stauchung, d.h. eine Anpassung der Funktion H an den vorhandenen Dichtebereich, ohne daß dabei der Gradient der Kurve geändert wird. Zu diesem Zweck werden sowohl die Ordinatenwerte H als auch die Abszissenwerte log B mit einem Faktor q multipliziert werden, der wie folgt gebildet wird:

$$q = (D_{max} - D_{min})/H_{max}$$

Dabei stellt $D_{max}$ bzw. $D_{min}$ die größte bzw. kleinste Dichte dar, die mit der Bildausgabe-Einheit erzielbar ist, und $H_{max}$ den Maximalwert der Kurve H in Fig. 2b. Für die reskalierten Ordinatenwerte $T_1$ gilt dann

$$T_1 = H/q + D_{min}$$

Es ergibt sich somit die in Fig. 2c in ausgezogenen Linien dargestellte Funktion $T_1$, die hinsichtlich der Steigung der Kurve H entspricht (Fig. 2b hat einen anderen Ordinaten-Maßstab als Fig. 2c!), die aber auf einen Wertebereich von etwa -0,6 bis +0,6 beschränkt ist (im Vergleich zu -2 bis +2 der Kurve H in Fig. 2b).

Die Kurve $T_1$ stellt die Transformationsfunktion dar, mit der die Werte S transformiert werden müssen, damit sich die Werte A ergeben. Dabei ist Voraussetzung, daß die Werte S auf den Wertebereich beschränkt sind, in dem die Transformationsfunktion $T_1$ definiert ist. Im nächsten Schritt wird die so berechnete Transformationsfunktion $T_1$ in dem Tabellenspeicher 17 gespeichert (Block 164), so daß jedem der Summen-Bildwerte S entsprechend dieser Transformationsfunktion ein Ausgangs-Bildwert A zugeordnet wird.

Wie oben ausgeführt, entspricht die Kurve $T_1$ der aus der vorgegebenen Kontrastfunktion $C_i$ (Fig. 2a) ableitbaren Dichtefunktion, wenn diese errechnete Dichtefunktion (H) hinsichtlich ihrer Ordinaten- und Abszissenwerte so zusammengestaucht bzw komprimiert (oder expandiert) wird, daß der Schwärzungsumfang dem gegebenen Schwärzungsumfang der Bildausgabe-Einheit 18 angepaßt ist. Die so bestimmte Funktion $T_1$ entspricht aber in der Regel nicht der vom Benutzer gewünschten Dichtefunktion.

Die Dichtefunktion $D_i$, d.h. die Dichte in Abhängigkeit von dem Logarithmus der durch Referenzwert dividierten Belichtung (Dosis) bzw. in Abhängigkeit von den Eingangs-Bildwerten E bzw. den Summen-Bildwerten S wird vom Benutzer ebenso vorgegeben (Block 165) wie die Kontrastfunktion $C_i$. In Fig. 2d ist die vom Benutzer vorgegebene Dichtefunktion $D_i$ mit gestrichelten Linien dargestellt. Man erkennt, daß $T_1$ deutlich von dieser Dichtefunktion $D_i$ abweicht. Um diese Abweichung zu kompensieren, wird die Differenz der Abszissenwerte von $T_1$ und $D_i$ als Funktion des jeweiligen Abszissenwertes von $D_i$ ermittelt. Dies ist in Fig. 2c für einen Punkt auf der Kurve $D_i$ mit einem Abszissenwert von ca. 1,5 durch gestrichelte Linien angedeutet. Die Abszissendifferenz zwischen $T_1$ und $D_i$ beträgt in diesem Punkt ca. -1, so daß sich für die gesuchte Funktion bei einem Abszissenwert von +1,5 ein Ordinatenwert von -1 ergibt. Dieser Wert ist in Fig. 2d durch eine gestrichelte Linie angedeutet.

Wiederholt man diesen durch den Block 166 angedeuteten Schritt für alle Punkte auf der Kennlinie $D_i$ bzw. $T_1$, dann ergibt sich der in Fig. 2d durch die Kurve $T_2$ angegebene Verlauf. Diese Kurve stellt die Transformation dar, der die Tiefpaß-Bildwerte $L_o$ unterzogen werden müssen. Die Transformationsfunktion $T_2$ wird in den Tabellenspeicher 12 geladen, wodurch erreicht wird, daß - für großflächige Strukturen - der Zusammenhang zwischen dem Eingangs-Bildwert E und dem Ausgangs-Bildwert A der Kurve $D_i$ entspricht.

Wie bereits erwähnt, erzeugt die Bildausgabe-Einheit 18, z.B. ein Laser-Imager, aus den Ausgangs-Bildwerten A ein sichtbares Bild, dessen Dichte linear von den Augangs-Bildwerten A abhängt. Im allgemeinen ist aber der Zusammenhang zwischen der Intensität des Laserstrahls und der Dichte des damit erzeugten Bildes nichtlinear. Um diese Nichtlinearität auszugleichen, umfaßt die Bildausgabe-Einheit 18 einen weiteren Tabellenspeicher 181, dessen Ausgangssignal über einen Digital-Analogwandler 182 eine Einheit 183 zugeführt wird, die die Belichtung des zu erzeugenden sichtbaren Bildes entsprechend dem analogen Ausgangssignal steuert. Somit erfährt das Summensignal S nacheinander eine Transformation entsprechend der Transformationsfunktion $T_1$ und eine weitere Transformation entsprechend der vorgegebenen Kennlinie des Bildwiedergabegerätes 18. Es ist für den Fachmann klar, daß er die beiden aufeinanderfolgenden Transformationen zu einer einzigen Transformation - mit einer entsprechend geänderten Transformationsfunktion - kombinieren kann, so daß anstelle zweier Tabellenspeicher nur noch ein Tabellenspeicher erforderlich ist.

In Fig. 4 ist ein schematisches Blockschaltbild einer anderen Ausführungsform der Erfindung dargestellt, bei dem die Erzeugung der Eingangs-Bildwerte E und die Verarbeitung der Ausgangs-Bildwerte A auf die gleiche Weise erfolgt wie bei dem in Fig. 1 dargestellten Blockschaltbild, weshalb die dazu erforderlichen Teile der Einfachheit halber in Fig. 4 weggelassen sind. Während aber bei der in Fig. 1 dargestellten Ausführungsform aus den Eingangs-Bildwerten E Tiefpaß-Bildwerte abgeleitet werden, die nach Transformation zu den Eingangs-Bildwerten addiert werden, werden bei der Ausführungsform nach Fig. 4 gewichtete Hochpaß-Bildwerte zu den - zuvor transformierten - Eingangs-Bildwerten addiert entsprechend dem sogenannten Unsharp-Masking-Verfahren. Im einzelnen geschieht bei der erfindungsgemäßen Modifikation dieses bekannten Verfahrens folgendes:

Die Eingangs-Bildwerte E werden einer ersten Transformation mittels eines Tabellenspeichers 21 unterzogen, so daß sich transformierte Bildwerte $E_t$ ergeben. Die Transformation erfolgt dabei entsprechend einer Transformationsfunktion F, bei der die transformierten Bildwerte $E_t$ in gleicher Weise von den Eingangs-Bildwerten E abhängen, in der bei der vom Benutzer vorgegebenen Dichtefunktion $D_i$ die Dichte D vom Logarithmus der Belichtung (log B) abhängt. Die Transformationsfunktion F läßt sich somit unmittelbar aus der Dichtefunktion $D_i$ ableiten.

Außerdem werden die Eingangs-Bildwerte E einer Tiefpaßfilterung unterzogen (Block 22), wobei bezüglich der Größe des Kernels des Tiefpaßfilters die in Verbindung mit Fig. 1 gemachten Ausführungen gelten. Die auf diese Weise erzeugten Tiefpaß-Bildwerte L werden von den Eingangs-Bildwerten E subtrahiert (Block 23). Da die Eingangs-Bildwerte E Informationen sowohl über kleine als auch große Strukturen enthalten, während die Tiefpaß-Bildwerte L nur noch Informationen über große Strukturen enthalten, beinhalten die aus der Subtraktion resultierenden Bildwerte H nur Informationen über die feinen Strukturen. Es handelt sich also um Hochpaß-Bildwerte H. Die Hochpaß-Bildwerte H werden mit einem Gewichtungsfaktor G multipliziert, der von den Tiefpaß-Bildwerten L abhängig ist. (Block 25)

Wie der Gewichtungsfaktor G in Abhängigkeit von den Tiefpaß-Bildwerten L gewonnen wird, wird in Verbindung mit Fig. 2e erläutert. Dabei stellt die Kurve $C_i$ die vom Benutzer vorgegebene Kontrastfunktion dar (vergl. auch Fig. 2a). Die Kurve $D'_i$ entspricht der korrelierten Kontrastfunktion, d.h. dem Differentialquotienten der Dichtefunktion $D_i$ nach dem Logarithmus B, so daß gilt

$$D'_i = dD_i/d(\log B)$$

Die so ermittelte Funktion $D'_i$ entspricht der Kontrastfunktion, den ein Film mit der vom Benutzer vorgegebenen Dichtefunktion $D_i$ aufweisen würde. Der Gewichtungsfaktor G ergibt sich aus der Differenz dieser beiden Werte, d.h.

$$G = C_i - D'_i$$

Man erkennt aus Fig. 2d, daß für die Abszissenwerte, für die die korrelierte Kontrastfunktion $D'_i$ der eingestellten Kontrastfunktion $C_i$ entspricht, der Gewichtungsfaktor Null ist. Für die kleinen und die großen Abszissenwerte ist $C_i$ aber größer als $D'_i$, so daß hier G > 0 werden muß, damit auch in diesem Bereich der erwünschte Detailkontrast erreicht wird.

Da zwischen den Eingangs- bzw. den Tiefpaß-Bildwerten einerseits und dem relativen Logarithmus der Belichtung (log B) andererseits ein linearer Zusammenhang besteht, kann die Gewichtungsfunktion G nach geeigneter Skalierung in einen Tabellenspeicher 24 geladen werden, der für jeden Tiefpaß-Bildwert L den zugehörigen Gewichtungsfaktor G ausgibt. Die Hochpaß-Bildwerte H werden mit dem jeweiligen Gewichtungsfaktor G multipliziert (Block 25), und das so erhaltene Produkt G x H wird gespeichert (Block 26). Es entspricht ebenfalls einer Transformation, die in diesem Fall jedoch von zwei Parametern abhängt, nämlich von H und von L.

Es werden dann die transformierten Eingangs-Bildwerte $E_t$ und die gewichteten Hochpaß-Bildwerte $H_t$, die demselben Bildpunkt zugeordnet sind, addiert (Block 27), und die so gewonnenen Bildwerte A werden der nicht dargestellten Bildausgabe-Einheit zugeführt.

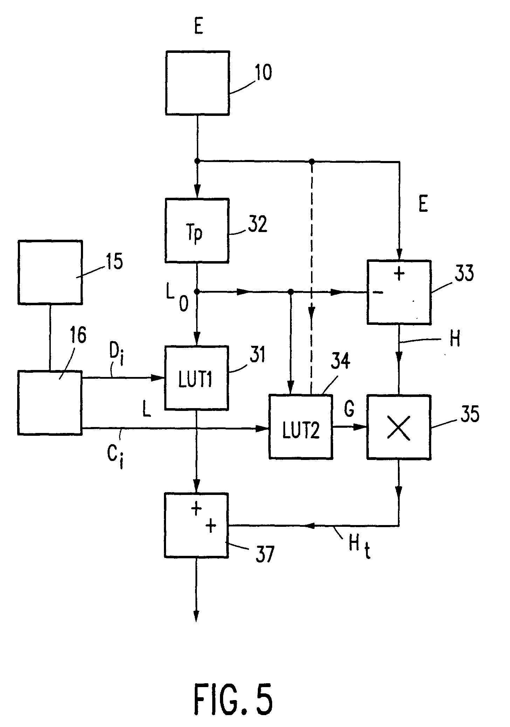

In Fig. 5 ist das Blockschaltbild einer bevorzugten Ausführungsform schematisch dargestellt. Die Signalverarbeitung vor dem Eingangs-Bildwertspeicher 10 erfolgt dabei so wie in Verbindung mit Fig. 1 erläutert. Während bei den in Fig. 1 und Fig. 4 dargestellten Ausführungsbeispielen jedoch nur in einem der beiden Signalpfade eine Tiefpaßfilterung (Fig. 1) oder eine Hochpaßfilterung (Fig. 4) erfolgt, während im anderen Signalpfad keine Filterung stattfindet, wird bei dem in Fig. 5 dargestellten Ausführungsbeispiel in dem einen Signalpfad eine Hochpaßfilterung und in dem anderen Signalpfad eine Tiefpaßfilterung durchgeführt, und zwar jeweils mit demselben Filterkernel. Dies hat den Vorteil, daß die Transformationsfunktionen nicht mehr durch eine mehr oder weniger komplizierte Berechnung aus der Dichtefunktion $D_i$ und der Kontrastfunktion $C_i$, die vom Benutzer vorgegeben werden, berechnet werden, da diese Funktionen in diesem Sonderfall schon die Transformationsfunktionen darstellen.

Demgemäß wird im einen Signalpfad (Block 32) eine Tiefpaßfilterung durchgeführt, wonach die erzeugten Tiefpaß-Bildwerte $L_o$ einer Transformation unterzogen werden, wobei die Transformationsfunktionen der vom Benutzer vorgegebenen Dichtefunktion $D_i$ entspricht.

Im anderen Signalpfad werden die Tiefpaß-Bildwerte $L_o$ von den Eingangs-Bildwerten E subtrahiert (Block 33), so daß Hochpaß-Bildwerte H gebildet werden. Diese Hochpaßfilterung ist komplementär zur Tiefpaßfilterung im anderen Signalpfad, d.h. die Addition von H und $L_o$ liefert die Eingangs-Bildwerte E. Die Hochpaß-Bildwerte werden mit einem Gewichtungsfaktor G multipliziert (Block 35), der einem Tabellenspeicher entnommen wird, in dem die Kontrastfunktion $C_i$, d.h. der Kontrast als Funktion der Eingangs-Bildwerte gespeichert ist. Der für die verschiedenen Bildwerte vorgesehene Kontrast (und damit der Gewichtungsfaktor) wird aus dem Tabellenspeicher 34 in Abhängigkeit von dem Tiefpaß-Bildwert $L_o$ oder - wie gestrichelt angedeutet - durch den Eingangs-Bildwert E für den jeweiligen Bildpunkt bestimmt. Im allgemeinen ist G größer 1, so daß in dem wiederzugebenden Bild die Detailkontraste entsprechend angehoben sind. Die durch diese Multiplikation transformierten Hochpaß-Bildwerte $H_t$ werden Bildpunkt für Bildpunkt zu den transformierten Tiefpaß-Bildwerten addiert, die jeweils demselben Bildpunkt zugeordnet sind. Die durch die Summierung gewonnenen Bildwerte A werden der nicht dargestellten Bildausgabe-Einheit zugeführt.

Bisher wurde davon ausgegangen, daß die BildausgabeEinheit als sichtbares Bild z.B. ein Filmbild erzeugt, doch kann als Bildausgabe-Einheit auch ein Monitor dienen. In diesem Fall muß der Benutzer anstelle einer Dichtefunktion lediglich eine Helligkeitsfunktion vorgeben. Die Erfindung ist auch nicht nur zur Umsetzung von Röntgenaufnahmen in ein sichtbares Bild geeignet, sondern man kann damit auch die z.B. mit Hilfe von Magnetresonanz- oder Ultraschall-Verfahren gewonnenen Bilddaten entsprechend verarbeiten. Wesentlich ist nur, daß die kleineren Bildstrukturen einen geringeren Dynamikumfang haben als die größeren Bildstrukturen.

**Patentansprüche**

1. Verfahren zur Wiedergabe einer räumlichen Verteilung, insbesondere einer Röntgenaufnahme, deren Bildpunkten digitale Eingangs-Bildwerte (E) zugeordnet sind, mit folgenden Maßnahmen:

   - Eingeben der für die Wiedergabe gewünschten Kontrastfunktion ($C_i$) und Dichtefunktion ($D_i$),
   - Verarbeiten der Eingangs-Bildwerte (E) in zwei Signalpfaden, Summieren der in den Signalpfaden gebildeten Bildwerte und Zuführen der so entstehenden Summen-Bildwerte (S) zu einer Ausgabeeinheit zur Erzeugung eines sichtbaren Bildes,
   - Filterung der Eingangs-Bildwerte (E) in dem einen Signalpfad zur Erzeugung von Tiefpaß- ($L_o$) oder Hochpaß-Bildwerten (H) und dazu komplementäre oder keine Filterung in dem anderen Signalpfad,
   - Transformation der in dem anderen Signalpfad entstehenden Bildwerte oder der Summen-Bildwerte mit einer ersten Transformationsfunktion ($T_1$;F) und Transformation der in dem einen Signalpfad gebildeten Bildwerte mit einer zweiten Transformationsfunktion ($T_2$ bzw. G), wobei die beiden Transformationsfunktionen so aus der eingegebenen Dichte- und Kontrastfunktion abgeleitet werden, daß in dem wiedergegebenen Bild der Detailkontrast entsprechend der Kontrastfunktion ($C_i$) und die Helligkeit bzw Dichte der gößeren Bildstrukturen enstprechend der Dichtefunktion ($D_i$) verlaufen.

2. Verfahren nach Anspruch 1, dadurch gekennzeichnet,

   - daß die erste Transformationsfunktion ($T_1$) durch Berechnung des Integrals über die eingegebene Kontrastfunktion ($C_i$) und durch Anpassung des Integrals an die maximale Dichte bzw. Helligkeit ($D_{max}$) eines sichtbaren Bildes gebildet wird,
   - daß die zweite Transformationsfunktion ($T_2$) aus der Differenz der ersten Transformationsfunktion ($T_1$) und der eingegebenen Dichtefunktion ($D_i$) für jeweils die gleiche Dichte bzw. Helligkeit ermittelt wird,
   - daß aus den Eingangs-Bildwerten (E) TiefpaßBildwerte ($L_o$) gebildet werden, die entsprechend der zweiten Transformationsfunktion ($T_2$) transformiert werden,
   - daß die transformierten Tiefpaß-Bildwerte (L) den Eingangs-Bildwerten (E) überlagert werden und
   - daß die dadurch entstehenden Summen-Bildwerte (S) einer Transformation entsprechend

der ersten Transformationsfunktion ($T_1$) unterzogen werden.

3. Verfahren nach Anspruch 1, <u>dadurch gekennzeichnet</u>,

- daß die erste Transformationsfunktion (F) der eingegebenen Dichtefunktion entspricht ($D_i$),
- daß die zweite Transformationsfunktion aus der Differenz der eingegebenen Kontrastfunktion ($C_i$) und der korrelierten Kontrastfunktion ($D'_i$) bestimmt wird,
- daß aus den Eingangs-Bildwerten (E) Hochpaß-Bildwerte (H) abgeleitet werden
- daß die Hochpaß-Bildwerte (H) mit einem (G) Gewichtungsfaktor multipliziert werden, dessen Abhängigkeit von den Tiefpaß-Bildwerten der zweiten Transformationsfunktion (G) entspricht
- daß die Eingangs-Bildwerte (E) einer Transformation entsprechend der ersten Transformationsfunktion ($T_1$) unterzogen werden und
- daß zur Bildung der Ausgangs-Bildwerte (A) die transformierten Eingangs-Bildwerte ($E_t$) und die mit dem Gewichtungsfaktor (G) multiplizierten Hochpaß-Bildwerte ($H_t$) bildpunktweise überlagert werden.

4. Verfahren nach Anspruch 1, <u>dadurch gekennzeichnet</u>,

- daß die erste Transformationsfunktion (F) der eingegebenen Dichtefunktion entspricht ($D_i$),
- daß die zweite Transformationsfunktion der eingegebenen Kontrastfunktion ($C_i$) entspricht,
- daß aus den Eingangs-Bildwerten (E) Hochpaß-Bildwerte (H) abgeleitet werden
- daß die Hochpaß-Bildwerte (H) mit einem (G) Gewichtungsfaktor multipliziert werden, dessen Abhängigkeit von den Tiefpaß-Bildwerten der zweiten Transformationsfunktion (G) entspricht
- daß aus den Eingangs-Bildwerten (E) Tiefpaß-Bildwerte (L) abgeleitet werden
- daß die Tiefpaß-Bildwerte ($L_o$) einer Transformation entsprechend der ersten Transformationsfunktion ($T_1$) unterzogen werden
- daß die transformierten Tiefpaß-Bildwerte (L) und die mit dem Gewichtungsfaktor (G) multiplizierten Hochpaß-Bildwerte ($H_t$) bildpunktweise überlagert werden.

5. Verfahren nach Anspruch 1 zur Wiedergabe einer Röntgenaufnahme als sichtbares Bild, wobei der Dosis (B) in den einzelnen Bildpunkten proportionale Bildwerte erzeugt werden, <u>dadurch gekennzeichnet</u>, daß die Eingangs-Bildwerte (E) aus diesen Bildwerten durch eine logarithmische Transformation abgeleitet werden.

6. Anordnung zur Durchführung des Verfahrens nach Anspruch 1, <u>gekennzeichnet durch</u>

a) eine Detektoranordnung (4,5) zur Umsetzung der ortsabhängigen Strahlungsintensität einer Röntgenaufnahme in ein aus digitalen Eingangs-Bildwerten (E) bestehendes Datenfeld,

b) Mittel (15) zur getrennten Eingabe einer Dichtefunktion ($D_i$) und einer Kontrastfunktion ($C_i$),

c) Mittel (16) zum Ableiten einer ersten Transformationsfunktion ($T_1$) und einer zweiten Transformationsfunktion ($T_2$) aus der Kontrastfunktion und der Dichtefunktion,

d) einen ersten und einen zweiten Signalpfad zur Verarbeitung der Eingangs-Bildwerte

e) ein räumlich wirkendes Filter (11;22,23) in dem einen Signalpfad zur Erzeugung von Tiefpaß-Bildwerten ($L_o$) oder von Hochpaß-Bildwerten (H) aus den EingangsBildwerten (E),

f) eine die gefilterten Bildwerte verarbeitenden Transformationsanordnung (12;24,25) zum Transformieren der Tiefpaß- oder Hochpaß-Bildwerte gemäß der einen Transformationsfunktion ($T_2$;G),

g) eine Überlagerungseinrichtung (14;27) zum Überlagern der Bildwerte aus den beiden Signalpfaden, die jeweils dem gleichen Bildpunkt zugeordnet sind, zur Erzeugung von Summen-Signalen

h) eine zweite Transformationsanordnung (17; 21) zum Transformieren der im zweiten Signalpfad oder am Ausgang der Überlagerungseinrichtung anliegenden Bildwerte gemäß der anderen Transformationsfunktion,

i) eine die Summen-Bildwerte als sichtbares Bild ausgebenden Bildausgabe-Einheit (18).

**Claims**

1. A method of displaying a spatial distribution of notably an X-ray image whose pixels are associated with digital input image values (E), comprising the following steps:

- entering the contrast function ($C_i$) and the density function ($D_i$) desired for the display,
- processing the input image values (E) in two signal channels, summing the image values formed in the signal channels, and applying the sum image values (S) thus formed to an output unit for forming a visible image,
- filtering the input image values (E) in one signal channel in order to generate low-pass image

values ($L_o$) or high-pass image values (H), and performing complementary filtering, or no filtering, in the other signal channel,

- transforming the image values formed in the other signal channel, or the sum image values, by means of a first transformation function ($T_1$; F), and transforming the image values formed in the one signal channel by means of a second transformation function ($T_2$ or G), the two transformation functions being derived from the preset density function and the present contrast function in such a manner that in the image displayed the detail contrast is in conformity with the contrast function ($C_i$) and the brightness, or density, of the larger image structures varies in conformity with the density function ($D_i$).

2. A method as claimed in Claim 1, characterized in that

- the first transformation function ($T_1$) is formed by calculation of the integral over the contrast function ($C_i$) entered and by adaptation of the integral to the maximum density or brightness ($D_{max}$) of a visible image,
- the second transformation function ($T_2$) is determined from the difference between the first transformation function ($T_1$) and the preset density function ($D_i$) for each time the same density or brightness,
- from the input image values (E) there are formed low-pass image values ($L_o$), which are transformed in conformity with the second transformation function ($T_2$),
- the transformed low-pass image values (L) are superposed on the input image values (E), and
- the sum image values (S) thus produced are subjected to a transformation in conformity with the first transformation function ($T_1$).

3. A method as claimed in Claim 1, characterized in that

- the first transformation function (F) corresponds to the density function ($D_i$) entered,
- the second transformation function is determined from the difference between the contrast function ($C_i$) entered and the correlated contrast function ($D'_i$),
- high-pass image values (H) are derived from the input image values (E),
- the high-pass image values (H) are multiplied by a weighting factor (G) whose dependency on the low-pass image values corresponds to the second transformation function (G),
- the input image values (E) are subjected to a transformation in conformity with the first transformation function ($T_1$), and

- the transformed input image values ($E_t$) and the high-pass image values ($H_t$) multiplied by the weighting factor (G) are superposed pixel-by-pixel in order to form the output image values (A).

4. A method as claimed in Claim 1, characterized in that

- the first transformation function (F) corresponds to the density function ($D_i$) entered,
- the second transformation function corresponds to the contrast function ($C_i$) entered,
- high-pass image values (H) are derived from the input image values (E),
- the high-pass image values (H) are multiplied by a weighting factor (G) whose dependency on the low-pass image values corresponds to the second transformation function (G),
- low-pass image values (L) are derived from the input image values (E),
- the low-pass image values ($L_o$) are subjected to a transformation in conformity with the first transformation function ($T_1$), and
- the transformed low-pass image values (L) and the high-pass image values ($H_t$) multiplied by the weighting factor (G) are superposed pixel-by-pixel.

5. A method as claimed in Claim 1 for the display of an X-ray image as a visible image, image values being formed which are proportional to the dose (B) in the individual pixels, characterized in that the input image values (E) are derived from these image values by a logarithmic transformation.

6. A device for carrying out the method claimed in Claim 1, characterized in that it comprises

a) a detector device (4, 5) for converting the location-dependent radiation intensity of an X-ray image into a data field consisting of digital input image values (E),
b) means (15) for separately entering a density function ($D_i$) and a contrast function ($C_i$),
c) means (16) for deriving a first transformation function ($T_1$) and a second transformation function ($T_2$) from the contrast function and the density function,
d) a first and a second signal channel for processing the input image values,
e) a spatial filter (11; 22, 23) in the one signal channel for generating low-pass image values ($L_o$) or high-pass image values (H) from the input image values (E),
f) a transformation device (12; 24, 25) which processes the filtered image values so as to transform the low-pass or high-pass image val-

g) a superposition device (14; 27) for superposing the image values from the two signal channels, associated each time with the same pixel, in order to form sum signals,

h) a second transformation device (17; 21) for transforming the image values present in the second signal channel or on the output of the superposition device in conformity with the other transformation function, and

i) an image output unit (18) which outputs the sum image values as a visible image.

## Revendications

1. Procédé de reproduction d'une distribution spatiale, en particulier d'une radiographie aux pixels de laquelle sont effectés des valeurs d'image d'entrée numériques (E), avec les mesures suivantes:

   - introduction de la fonction de contraste ($C_i$) et de la fonction de densité ($D_i$) souhaitées pour la reproduction,
   - traitement des valeurs d'image d'entrée (E) en deux cheminements de signal, addition des valeurs d'image formées dans les cheminements de signal et apport des valeurs d'image cumulées (S) ainsi formées à une unité de sortie en vue de la production d'une image visible,
   - filtrage des valeurs d'image d'entrée (E) dans l'un des cheminement de signal en vue de la production de valeurs d'image passe-bas ($L_0$) ou passe-haut (H) et filtrage complémentaire ou absent dans l'autre cheminement de signal,
   - transformation des valeurs d'image formées dans l'autre cheminement de signal ou des valeurs d'image cumulées avec une première fonction de transformation ($T_1$, F) et transformation des valeurs d'image formées dans un cheminement de signal avec une deuxième fonction de transformation ($T_2$ ou G), les deux fonctions de transformation étant ainsi dérivées des fonctions de densité et de contraste introduites de telle sorte que, dans l'image reproduite, le contraste des détails varie conformément à la fonction de contraste ($C_i$) et la luminance ou la densité des structures d'image plus grandes conformément à la fonction de densité ($D_i$).

2. Procédé selon la revendication 1, caractérisé en ce

   - la première fonction de transformation ($T_1$) est formée par calcul de l'intégrale sur la fonction de contraste (Ci) introduite et par adaptation de l'intégrale à la densité ou luminance maximale ($D_{max}$) d'une image visible,
   - la deuxième fonction de transformation ($T_2$) est déterminée à partir de la différence de la première fonction de transformation ($T_1$) et de la fonction de densité ($D_i$) introduite pour la même densité ou luminance,
   - des valeurs d'image passe-bas ($L_0$) qui sont transformées conformément à la deuxième fonction de transformation ($T_2$) sont formées à partir des valeurs d'image d'entrée (E),
   - les valeurs d'image passe-bas (L) transformées sont superposées aux valeurs d'image d'entrée (E) et
   - les valeurs d'image cumulées (S) ainsi formées sont soumises à une transformation conformément à la première fonction de transformation ($T_1$).

3. Procédé selon la revendication, caractérisé en ce

   - la première fonction de transformation (F) correspond à la fonction de densité introduite ($D_i$),
   - la deuxième fonction de transformation est déterminée à partir de la différence entre la fonction de contraste ($C_i$) introduite et la fonction de contraste ($D'_i$) corrélée,
   - les valeurs d'image passe-haut (H) sont dérivées des valeurs d'image d'entrée (E),
   - les valeurs d'image passe-haut (H) sont multipliées par un facteur de pondération (G) dont le rapport avec les valeurs d'image passe-bas correspond à la deuxième fonction de transformation (G),
   - les valeurs d'image d'entrée (E) sont soumises à une transformation correspondant à la première fonction de transformation ($T_1$) et
   - les valeurs d'image d'entrée (A) transformées et les valeurs d'image passe-haut ($H_t$) multipliées par le facteur de pondération (G) sont superposées pixel par pixel en vue de la formation des valeurs d'image de sortie (A).

4. Procédé selon la revendication 1, caractérisé en ce

   - la première fonction de transformation (F) correspond à la fonction de densité introduite ($D_i$),
   - la deuxième fonction de transformation correspond à la fonction de contraste introduite ($C_i$),
   - les valeurs d'image passe-haut (H) sont dérivées des valeurs d'image d'entrée (E),
   - les valeurs d'image passe-haut (H) sont multipliées par un facteur de pondération (G) dont le rapport avec les valeurs d'image passe-bas correspond à la deuxième fonction de transformation (G),
   - les valeurs d'image passe-bas (L) sont dérivées des valeurs d'image d'entrée (E);
   - les valeurs d'image d'entrée ($L_0$) sont soumises à une transformation correspondant à la pre-

mière fonction de transformation ($T_1$) et

- les valeurs d'image passe-bas transformées (L) et les valeurs d'image passe-haut ($H_t$) multipliées par le facteur de pondération (G) sont superposées pixel par pixel en vue de la formation des valeurs d'image de sortie.

5. Procédé selon la revendication 1 de reproduction d'une radiographie comme image visible, des valeurs d'image proportionnelles à la dose (B) dans les différents pixels étant produites, <u>caractérisé en ce que</u> les valeurs d'image d'entrée (E) sont dérivées de ces valeurs d'image par une transformation logarithmique.

6. Dispositif de mise en oeuvre du procédé selon la revendication 1, <u>caractérisé par</u>

a) un dispositif détecteur (4,5) en vue de la transformation de l'intensité du rayonnement dépendant du lieu d'une radiographie en un champ de données composé de valeurs d'image d'entrée numériques (E),

b) des moyens (15) en vue de l'introduction séparée d'une fonction de densité ($D_i$) et d'une fonction de contraste ($C_i$),

c) des moyens (16) de dérivation d'une première fonction de transformation ($T_1$) et d'une deuxième fonction de transformation ($T_2$) à partir de la fonction de contraste et de la fonction de densité et

d) d'un premier et un deuxième cheminements de signal en vue du traitement des valeurs d'image d'entrée,

e) un filtre agissant spatialement (11,22, 23) dans l'un des cheminements de signal en vue de la production de valeurs d'image passe-bas ($L_0$) ou de valeurs d'image passe-haut (H) à partir des valeurs d'image d'entrée (E),

f) un dispositif de transformation traitant les valeurs d'image filtrées (12; 24, 25) en vue de la transformation des valeurs d'image passe-bas ou passe-haut conformément à l'une des fonctions de transformation ($T_2$, G),

g) un dispositif de superposition (14, 27) en vue de la superposition des valeurs d'image à partir de deux cheminements de signal qui sont respectivement affectées au même pixel en vue de la production de signaux cumulés,

h) un deuxième dispositif de transformation (17; 21) en vue de la transformation des valeurs d'image appliquées dans le deuxième cheminement de signal ou à la sortie du dispositif de superposition conformément à l'autre fonction de transformation,

i) une unité de sortie d'image (18) sortant les valeurs d'image cumulées comme image visible.

FIG. 1

FIG.2a

FIG.2b

FIG.2c

FIG.2d

FIG.2e

```
┌──────────────────────┐ 161
│    ──→   Ci          │
└──────────────────────┘
          │
          ▼
┌──────────────────────┐ 162
│      H = ∫ Ci        │
└──────────────────────┘
          │
          ▼
┌──────────────────────┐ 163
│   H·q ;  q·logB      │
└──────────────────────┘
          │
          ▼
┌──────────────────────┐ 164
│   T1   ──→   LUT2    │
└──────────────────────┘
          │
          ▼
```

```
┌──────────────────────┐ 165
│    ──→   Di          │
└──────────────────────┘
          │
          ▼
┌──────────────────────┐ 166
│        Diff          │
└──────────────────────┘
          │
          ▼
┌──────────────────────┐ 167
│   T2   ──→   LUT1    │
└──────────────────────┘
          │
          ▼
```

FIG. 3

FIG. 4

FIG. 5